# EUROPEAN PATENT APPLICATION

(11) **EP 1 659 468 A2**
(43) Date of publication of application: **24.05.2006**
(21) Application number: 05024997.8
(22) Date of filing: 15.11.2005
(51) Int. Cl.: G05B 19/418

(54) **Universal run-time interface for agent-based simulation and control systems**

(30) Priority: 16.11.2004 US 628164 P; 24.01.2005 US 43013
(71) Applicant: Rockwell Automation Technologies, Inc., Mayfield Heights, OH 44124 (US)
(72) Inventor: Staron, Raymond J., Richmond Heights, OH 44143 (US); Hall, Kenwood H., Hudson, OH 44236 (US); Vrba, Pavel, Plzen 30100 (CZ); Maturana, Francisco P., Mayfield Heights, OH 44124 (US); Tichy, Pavel, Nymburk 28802 (CZ); Slechta, Petr, Ceska Lipa 47006 (CZ); Marik, Vladimir, Prague 5 15400 (CZ)
(74) Representative: Jung HML

(57) **Abstract**

The subject invention relates to systems and methods that provide dynamic and comprehensive analysis of an existing agent-based control system and/or a design for an agent-based control system. The system and methods employ an interface (*e.g*., data table, data memory, I/O) that facilitates simulation (*e.g*., simulating the physical system) and/or emulation (*e.g*., mirroring the physical system) of a plant, machine, apparatus, *etc*. and/or associated agents, control logic and/or visualization of their operation and interaction. The interface and visualization provide for dynamic simulation and/or emulation, wherein any change to any component can be automatically and immediately reflected in the simulation and/or emulation, and/or implemented in a real environment. In addition, the subject invention provides for seamless switching between simulation/emulation and the physical system.

## Description

### RELATED APPLICATIONS

This application claims the benefit of U.S. Provisional Patent Application Serial No. 60/628,164 filed on November 16, 2004 and entitled "AGENT-BASED SIMULATION AND CONTROL TOOL." The entirety of this application is incorporated herein by reference. This application is related to co-pending U.S. Patent Application Serial No. (Docket No. 04AB071/ALBRP388US) filed on and entitled "AGENT SIMULATION DEVELOPMENT ENVIRONMENT."

### TECHNICAL FIELD

The present invention generally relates to industrial control systems, and more particularly, to systems and methods that facilitate simulation and/or emulation of intelligent agent-based industrial control.

### BACKGROUND OF THE INVENTION

The industrial automation industry commonly utilizes industrial controllers to control entities therein. Industrial controllers generally are special purpose processing devices used for controlling (*e.g.*, automated and semi-automated) entities such as industrial processes, machines, manufacturing equipment, plants, and the like. A typical controller executes control logic to measure one or more variables and/or inputs representative of a status of a controlled entity, and/or effectuate outputs associated with control of the entity. These inputs and outputs can be digital and/or analog. Control routines can be created in an industrial control development environment that has various tools and interfaces, whereby a developer can construct and implement a control strategy using industrial programming languages and/or graphical representations of control functionality. Control routines can be downloaded from the development environment into one or more controllers for execution of the control strategy.

Measured inputs received from a controlled entity and outputs transmitted to the entity can pass through one or more input/output (I/O) modules in a control system. Such modules can serve in the capacity of an electrical interface between the controller and the controlled entity, and can be local and/or remote from the controller. Inputs and outputs can be recorded in I/O memory. The input values can be asynchronously or synchronously read from the controlled entity by one or more input modules and output values can be written directly to memory by a processor for subsequent communication to the entity by specialized communications circuitry. An output module can interface directly with a controlled entity by providing an output from memory to an actuator such as a motor, drive, valve, solenoid, and the like.

In distributed control systems, controller hardware configuration can be facilitated by separating the industrial controller into a number of control elements, each of which performs a different function. Particular control modules needed for the control task can be connected together on a common backplane within a rack and/or through a network or other communications medium. The control modules can include processors, power supplies, network communication modules, and I/O modules exchanging input and output signals directly with the controlled process. Data can be exchanged between modules using a backplane communications bus, which can be serial or parallel, or *via* a network. Various control modules of a distributed industrial control system can be spatially distributed along a common communication link in several locations. Certain I/O modules can be located proximate a portion of the controlled entity, and away from the controller. Data can be communicated with these remote modules over a common communication link, or network.

Intelligent agent technology can be utilized within industrial environments (*e.g.*, manufacturing and control) to render highly distributed, robust and flexible control of agent-based control systems. Such systems can be considered as a community of integrated (*e.g., via* plug-and-play) autonomous and efficiently cooperating units. These units typically are referred to as agents and are autonomous in the sense that they make local decisions. Although autonomous, such agents can cooperate with each other to achieve global-level goals. Unlike classical control systems that have a centralized control system, the autonomous agent-based technique does not utilize a central control element to affect the behavior of any agent. For example, there is no control element that would be aware of all the particular states or patterns of behavior of the overall system. The overall behavior of such a system emerges from asynchronously executed decision-making processes of particular agents and from dynamically changing patterns of interagent interactions.

Conventional techniques utilized to validate control strategies for such agent-based systems typically utilize experimental testing with a physical target system prior to commissioning a solution for deployment. Such testing can be relatively expensive and time intensive and, for certain applications, not realistic. In addition, modifying such systems (agents, control routines and/or the physical system) and/or injecting error conditions may require new software, builds and reloads and re-design of the physical target system, leading to further costs and time consumption. Thus, there is a need to provide a less expensive and more flexible technique to test agent-based control systems.

### SUMMARY OF THE INVENTION

The following presents a simplified summary of the invention in order to provide a basic understanding of some aspects of the invention. This summary is not an extensive overview of the invention. It is intended to neither identify key or critical elements of the invention nor delineate the scope of the invention. Its sole purpose is to present some concepts of the invention in a simplified form as a prelude to the more detailed description that is presented later.

The subject invention relates to systems and methods that can mitigate experimental testing of physical entities (*e.g.,* industrial processes, machines, manufacturing equipment, plants...) to validate a control solution through simulation and/or emulation and a universal interface. As noted above, conventional techniques employed to validate intelligent agent-based control strategies typically utilize experimental testing with a physical entity (*e.g., via* test beds, scaled down replicas ...) prior to implementing the control strategy and/or building the physical entity. Such testing can be relatively expensive and time intensive and, for certain applications, not realistic. In addition, modifying one or more components of the control strategy (*e.g.*, agents, control routines...) and/or the physical entity, and/or injecting an anomaly into the control strategy may require development of new software, builds and reloads, and/or re-design of the physical entity, which can lead to further costs and time consumption.

The novel approach described herein provides for simulation (*e.g.*, simulating the physical system, intelligent agents and/or control logic), emulation (*e.g.*, mirroring executing agents and/or control logic, and/or the physical entity) and/or visualization thereof. The simulation and/or emulation is dynamic in nature such that any change to any component during simulation and/or emulation can be automatically and/or immediately (substantially at the same time) reflected in the simulation, emulation and/or visualization. The foregoing facilitates seamless switching between a simulation, an emulation, and/or the physical entity. This provides a mechanism for a user to replace the simulation/emulation with physical controllers (*e.g.*, soft and hard) and the physical system without any change to the intelligent agents and/or the control logic.

In one aspect of the invention, a system that facilitates interaction between components in an industrial control environment through a universal or common interface is illustrated. The system at least includes one or more intelligent agents, control logic and one or more controlled entities (*e.g.*, physical plants, machines, apparatuses, processes, equipment, and the like) coupled through the interface. The intelligent agents and the control logic can execute in conjunction to control the one or more controlled entities. The intelligent agents and the control logic can also be employed in a design phase to test a control solution prior to deployment, wherein the entities can be represented through one or more simulations. This pre-implementation testing can mitigate any need for experimental testing with a physical target systems and/or representative test beds prior to commissioning the solution for deployment. With pre-implementation testing, the intelligent agents and/or the control logic can execute within a soft and/or hard controller, and/or within a simulator along with a simulation of the entities. The agents, control logic and/or simulation/emulation can be dynamically modified without any need for new software, builds, reloads, re-design, *etc.* A tested solution can be utilized to control the entities.

The intelligent agents and the control logic can further be employed in a post-implementation phase, to verify new control solutions and/or observe behavior. For example, an emulation of the physical entities can be generated, wherein the new control solution can be employed to control the emulation rather than the physical entities. Similar to pre-implementation testing, the intelligent agents and/or the control logic can execute within a soft and/or hard controller, and/or within an emulator along with the emulation of the entities. The new control solution can be seamlessly integrated into the physical system without any need for new software or hardware, builds, reloads, re-design, *etc.* The system can further provide visualization capabilities to observe and/or effectuate interaction between virtual and/or real components in an industrial control environment through an interface. The visualization can be achieved through various types of user interfaces that facilitate interaction between a user and the interface and any component coupled to the interface. Such interaction includes developing agents and/or control logic, observing behavior, monitoring performance, setting parameters and variables, reading data, writing data, executing instructions, terminating executing instructions, accumulating historical information, trending, debugging, modifying, *etc*. The visualization can be part of a simulation environment, en emulation environment, a control environment, *etc*.

In another aspect of the invention, the interface can be an industrial controller data table, data memory and/or I/O. As such, interaction between the intelligent agents, control logic and/or the entities can include sharing data stored in and/or through the interface. By way of example, sensor and/or actuator values or any other control-related information can be shared through the interface. In yet another aspect of the invention, methods are provided for implementing such systems. In still another aspect of the invention, various user interfaces that can be employed to facilitate the systems and methods described herein are illustrated.

The following description and the annexed drawings set forth in detail certain illustrative aspects of the invention. These aspects are indicative, however, of but a few of the various ways in which the principles of the invention may be employed and the present invention is intended to include all such aspects and their equivalents. Other advantages and novel features of the invention will become apparent from the following detailed description of the invention when considered in conjunction with the drawings.

### BRIEF DESCRIPTION OF THE DRAWINGS

FIG. 1 illustrates an exemplary system that facilitates interaction between components in an industrial control environment through a universal or common interface.

FIG. 2 illustrates and exemplary system that couple virtual and/or real components in an industrial control environment through an interface component.

FIG. 3 illustrates an exemplary system that provides visualization capabilities to observe and/or effectuate interaction between virtual and/or real components in an industrial control environment.

FIG. 4 illustrates an exemplary system that utilizes an interface component of an industrial controller to couple intelligent agents, control logic, and physical entities.

FIG. 5 illustrates an exemplary system that facilitates validating a control strategy through coupling a simulation of a physical entity with intelligent agents and control logic.

FIG. 6 illustrates an exemplary system that facilitates validating a control strategy through coupling an emulation of a physical entity with intelligent agents and control logic.

FIG. 7 illustrates an exemplary system that provides visualization for validating control solutions utilizing an interface component of an industrial controller to couple agents and control logic with physical, simulated and/or emulated entities.

FIG. 8 illustrates an exemplary system that employs a data table of a PLC to integrate intelligent control, physical processes, emulated processes, and/or visualization of interaction there between.

FIG. 9 illustrates an exemplary system with an intelligent component that facilitates integration of agents, control logic, simulations, emulations, and/or physical entities.

FIG. 10 illustrates an exemplary method for shifting from simulation to real-life control.

FIG. 11 illustrates exemplary method for interfacing agents, control logic, and entities under their control for validating control strategies.

FIG. 12 illustrates exemplary method for validating a control solution through a simulation of an entity.

FIG. 13 illustrates exemplary method for validating a control solution through an emulation of an entity.

FIG. 14 illustrates exemplary method for employing a visualization environment for validating a control solution.

FIG. 15 illustrates an exemplary computing architecture that can be employed in connection with the subject invention.

FIG. 16 illustrates an exemplary networking environment that can be employed in connection with the subject invention.

FIG. 17 illustrates an exemplary interface with mechanisms to invoke load or save simulation and/or emulation, clear or start a simulation and/or emulation, and fit a simulation and/or emulation to the window pain.

FIG. 18 illustrates an exemplary interface with a simulation and/or emulation.

FIG. 19 illustrates an exemplary interface to view and/or set properties of a component of a simulation and/or emulation.

FIG. 20 illustrates an exemplary snapshot of a running simulation and/or emulation, wherein a conveyor has been dynamically disabled in order to determine how the system will resolve the disabled conveyor.

FIG. 21 illustrates an exemplary simulation and/or emulation with AGVs.

FIG. 22 illustrates an exemplary interface to view and/or set costs and/or time associated with conveyors.

FIG. 23 illustrates an exemplary interface to create AGVs.

### DETAILED DESCRIPTION OF THE INVENTION

The subject invention relates to coupling intelligent-agents, control logic and/or entities (*e.g.*, simulated, emulated and/or physical) controlled therewith in order to validate industrial control solutions. The foregoing mitigates any need to build the physical entities prior to validating a solution. The systems and methods utilize a universal interface (*e.g.*, an industrial controller data table, data memory, I/O...) to couple such components and facilitate interaction there between. In addition, visualization is provided to observe and/or effectuate the intelligent agents, control logic, simulations, and/or emulations. The visualization includes various user interfaces that provide a user with mechanisms for such observation and/or control.

Terms such as "component," "controllers," "PLCs," "agents," "simulation," "control logic," and variations thereof are intended to refer to a computer-related entity, either hardware, a combination of hardware and software, software, or software in execution as applied to an automation system for industrial control. For example, a component may be, but is not limited to being, a process running on a processor, a processor, an object, an executable, a thread of execution, a program, a computer, and an industrial controller. By way of illustration, both an application running on a server and the server can be components. One or more components may reside within a process and/or thread of execution and a component may be localized on one computer and/or distributed between two or more computers *(e.g., via* data packets and signals between the computers), industrial controllers, and/or modules communicating therewith.

The term "simulation" as utilized herein generally refers to a representation of a system, process, *etc*. prior to implementation. A simulation can be utilized to prove or validate a system and/or solution prior to constructing a real physical system, process, machine, plant, *etc.* The term "emulation" as utilized herein generally refers to a representation of a real physical system, process, plant, machine, equipment, *etc.* An emulation typically is a mirror image of the physical system, process, plant, *etc* and behaves substantially similar thereto. An emulation can be utilized to test variations of a control system without affecting an executing control system.

The subject invention is now described with reference to the drawings, wherein like reference numerals are used to refer to like elements throughout. In the following description, for purposes of explanation, numerous specific details are set forth in order to provide a thorough understanding of the present invention. It may be evident, however, that the present invention may be practiced without these specific details. In other instances, well-known structures and devices are shown in block diagram form in order to facilitate describing the present invention.

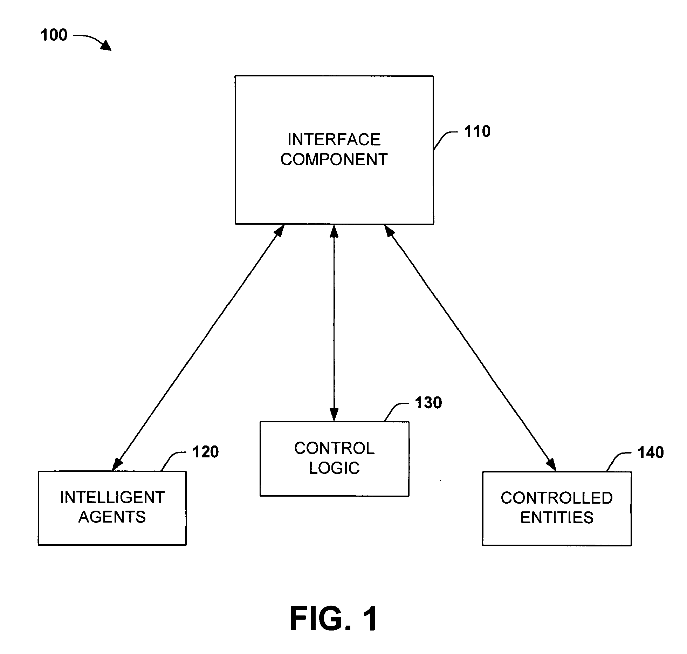

FIG. 1 illustrates a system 100 that facilitates interaction between components in an industrial control environment through a universal or common interface. Examples of industrial control components include one or more intelligent agents, control logic, soft controllers, hard controllers, visualization mechanisms, human machine interfaces (HMIs), development environments, graphical user interfaces, and application programming interfaces (APIs). Such components facilitate controlling, monitoring, diagnosing, programming, *etc*. various controlled entities of the industrial control environment. Examples of suitable entities include physical plants, machines, apparatuses, processes, equipment, *etc*. and/or simulations and/or emulations thereof. It is to be appreciated that the term "entity" as utilized hereafter generally refers to at least these examples as well as other known and/or similar entities.

For sake of brevity, the system 100 depicts three such entities coupled through the interface component 110. The illustrated entities include one or more intelligent agents 120 ("intelligent agents 120" and "agents 120"), control logic 130 and one or more controlled entities 140 ("entities 140"). In general, an intelligent agent can be an autonomous intelligent computational unit that can independently render decisions and control at least a portion of the entities 140. The intelligent agents 120, along with other similar and/or different intelligent agents, can be utilized as a community of autonomous, intelligent computational units, wherein respective agents typically are responsible for local decision-making and control of one or more explicit entities of the entities 140. The intelligent agents 120 typically cooperate with each other and/or other intelligent agents to provide a desirable global behavior for comprehensive control of the industrial control environment. By way of example, one agent may open and close a valve (or a set of valves) in a piping system, another agent may control a pump, and yet another agent may be responsible for controlling operations of a CNC drilling/milling machine. The control decisions of the agents can be based on at least the following types of information: information from a sensor(s) of one or more entities 140 the agent is controlling; information/requests from other agents; and internal states of the agents. The control action of an agent can be propagated to an appropriate actuator(s) of one or more entities 140 the agent is controlling. For example, it may close a valve because leakage in a piping system has been detected.

Cooperation amongst the intelligent agents 120 commonly is based on communication *via* transmitting messages following various interaction and negotiation scenarios and/or protocols. The intelligent agents 120 can be designed based on architectures such as FIPA, ACS/JDL, BDI, *etc.* and programmed in languages such as JAVA, C, C++, C#, J#, Visual Basic, Pascal, Assembly, Prolog, Python, *etc*. Such protocols and languages can be utilized to create and coordinate activities through logical links. The intelligent agent 120 can interact with other intelligent agents within and/or outside of an industrial environment through various languages such as FIPA ACL (Agent Communication Language), Job Description Language (JDL), KQML (Knowledge Query and Manipulation Language), *etc*., which can be employed by the intelligent agents 120 to represent planning, commitment, and execution phases during task negotiation. The intelligent agents 120 can emit messages outside their domain through wrapping messages inside envelopes. For example, JDL messages can be wrapped inside FIPA envelopes in order to emit messages outside of the intelligent agents 120 domain.

The control logic 130 can include various routines, programs, code, instructions, *etc*. that can be executed to measure one or more variables or inputs (*e.g.*, status, state...) and/or effectuate outputs associated with the controlled entities 140. Such inputs and outputs can be digital and/or analog. The control logic 130 can be created in a controller configuration environment that has various tools and interfaces, whereby a developer can construct and implement a control strategy using industrial and conventional programming languages or graphical representations of control functionality. Such control routines can be downloaded from the configuration system into one or more controllers for implementation of the control strategy in controlling the entities 140. Suitable programming languages include industrial languages such as, but not limited to, structured text (ST), sequential function chart (SFC), functional block diagram (FBD), instruction list (IL), and ladder diagram (LD), as well as other languages like C, C++, C#, Graphical Motion Language (GML), JAVA, Flow-Charts, *etc.*

The intelligent agents 120 and the control logic 130 typically execute and operate in conjunction to control the one or more controlled entities 140. As noted previously, the entities 140 can include physical plants, machines, apparatuses, processes, equipment, and the like. The intelligent agents 120 and the control logic 130 can also be employed in a design phase, or pre-implementation phase, to test a control solution prior to deployment, wherein the entities 140 can be represented through one or more simulations/emulations. This pre-implementation testing can mitigate any need for experimental testing with a physical target system and/or representative test bed prior to commissioning the solution for deployment. With pre-implementation testing, the intelligent agents 120 and/or the control logic 130 can execute within a soft and/or hard controller, and/or within a simulator along with a simulation of the entities 140. The agents 120, the control logic 130 and/or the simulation of entities 140 can be dynamically modified without any need for new software, builds, reloads, re-design, *etc.* A tested solution can be utilized to control the entities 140. The intelligent agents 120 and the control logic 130 can further be employed in a post-implementation phase, to verify new control solutions and/or observe behavior. For example, an emulation of the physical entities 140 can be generated, wherein the new control solution can be employed to control the emulation rather than the physical entities 140. Similar to pre-implementation testing, the intelligent agents 120 and/or the control logic 130 can execute within a soft and/or hard controller, and/or within an emulator along with the emulation of the entities 140. The new control solution can be seamlessly integrated into the physical system without any need for new software or hardware, builds, reloads, re-design, *etc*.

In accordance with an aspect of the invention, the interface component 110 can be an industrial controller data table, data memory and/or I/O. As such, interaction between the intelligent agents 120, control logic 130 and/or the entities 140 can include sharing data stored in and/or through the interface component 110. By way of example, sensor and/or actuator values or any other control-related information can be shared through the interface component 110.

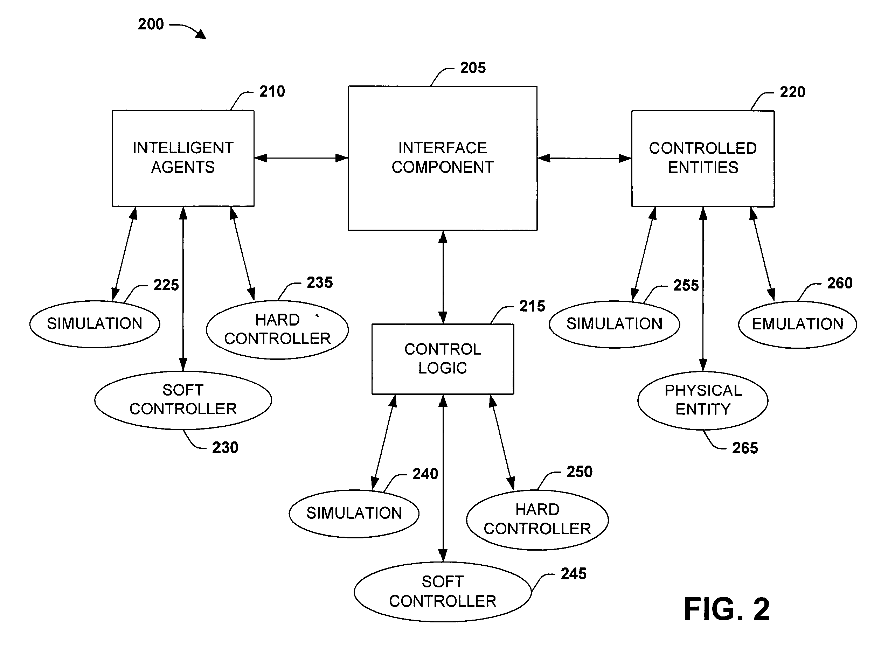

FIG. 2 illustrates a system 200 that facilitates interaction between virtual and/or real components in an industrial control environment through an interface component 205. The interface component 205 includes various adapters, connectors, interfaces, channels, *etc*. to seamlessly couple, for example, intelligent agents 210, control logic 215 and entities 220 to form a control environment. The intelligent agents 210 can include independent intelligent units that can be utilized as a community of autonomous, intelligent computational units that function together to provide a desirable global behavior for comprehensive control, as described previously. As depicted, the intelligent agents 210 can be simulated intelligent agents 225, soft controller based intelligent agents 230, and/or hard controller based intelligent agents 235. By way of example, a developer can employ any simulation environment that allows the developer to create virtual intelligent agents, such as the simulated intelligent agent 225. Such environments can provide for defining modifiable agent characteristics, attributes, behaviors, etc., which can dynamically change. In addition, such environment can provide for testing one or more aspects, responses, *etc.* of the simulated intelligent agents 225. Upon partial and/or full generation, the simulated intelligent agents 225 can be coupled with the other components of an industrial environment through the interface component 205. The simulation environment can facilitate such coupling.

In another instance, the simulated intelligent agent 225 can be implemented through various programming languages (*e.g*., JDL, C, C++, C#...). Such implementation can be provided to a soft controller and/or hard controller though downloading, uploading, installing, commissioning, etc., resulting in the soft controller based intelligent agents 230 and/or the hard controller based intelligent agents 235, which respectively can execute within one or more soft controllers and/or one or more hard controllers. These controllers can be coupled to the interface component 205, wherein the soft controller based intelligent agents 230 and/or the hard controller based intelligent agents 235 interact with any industrial component associated with the interface component 205. It is to be understood that the soft controller based intelligent agents 230 and/or the hard controller based intelligent agents 235 do not have to originate as simulations. The developer can employ essentially any development environment, program the soft controller based intelligent agents 230 and/or the hard controller-based intelligent agents 235, and provide them to respective soft and/or hard controllers. In addition, such controllers can be utilized in connection with a physical system, process, plant, machine, equipment, *etc*. and/or a simulation and/or an emulation thereof. As depicted, the soft controller based intelligent agents 230 and/or the hard controller based intelligent agents 235 can interact with any industrial component associated with the interface component 205.

Similarly, the control logic 215 can be simulated control logic 240, soft controller based control logic 245, and/or hard controller based control logic 250. Thus, the developer can employ any simulation environment that allows the developer to generate control logic, such as the simulated control logic 240. Suitable programming languages include industrial languages such as ST, SFC, FBD, IL, and LD, as well as other languages like C, C++, C#, GML, JAVA, Flow-Charts, *etc*. The simulated control logic 240 can be coupled to the interface component 205, wherein the simulator executes the control instructions. The simulated control logic 240 and/or other programmed control logic can be provided to a soft controller and/or hard controller through downloading, uploading, installing, commissioning, etc., resulting in the soft controller based control logic 245 and/or the hard controller based control logic 250, which respectively can execute within one or more soft controllers and/or one or more hard controllers. These controllers can be coupled to the interface component 205, wherein the soft controller based control logic 245 and/or the hard controller based control logic 250 can interact with any industrial component associated with the interface component 205.

The controlled entities 220 can be simulated controlled entities 255, emulated controlled entities 260, and/or physically controlled entities 265. In general, the simulated controlled entities 255 can be generated with any simulation environment that allows the developer to create simulations of systems, processes, *etc*. Such simulations can model potential physical systems, processes, *etc*. and typically are utilized to prove a control scheme prior to implementing the physical systems, processes, *etc.* The emulated controlled entities 260 can also be generated with any simulation environment that allows the developer to create simulations of systems, processes, *etc*. Such emulations typically mirror real physical systems, processes, *etc.* and can be utilized to test alternative control strategies and responses to particular stimuli without having to alter the real physical systems, processes, *etc.* The physical controlled entities 265 are real physical systems, processes, *etc.* Any of the simulated controlled entities 255, the emulated controlled entities 260, and/or the real physical controlled entities 265 can be coupled to the interface component 205 and communicate therewith to interact with any other industrial component associated with the interface component 205. In addition, the simulated controlled entities 255 and/or the emulated controlled entities 260 can be utilized to construct the real physical controlled entities 265.

It is to be appreciated that the interface component 205 can also be a simulated, a software based and/or a hardware based interface. As noted previously, the interface component 205 can be an industrial controller data table, data memory and/or I/O. Such controller can be a soft, hard and/or simulated controller. The interface component 205 provides for seamless and dynamic interaction amongst such components and can mitigate experimental testing of physical entities to validate a control solution. Conventional techniques employed to validate intelligent agent-based control strategies typically utilize experimental testing with a physical entity prior to implementing the control strategy and/or building the physical entity. Such testing can be relatively expensive and time intensive and, for certain applications, not realistic. In addition, modifying one or more components of the control strategy (*e.g.*, agents, control routines...) and/or the physical entity, and/or injecting an anomaly into the control strategy may require development of new software, builds and reloads, and/or re-design of the physical entity, which can lead to further costs and time consumption. Thus, the subject invention provides various novel improvements over conventional approaches.

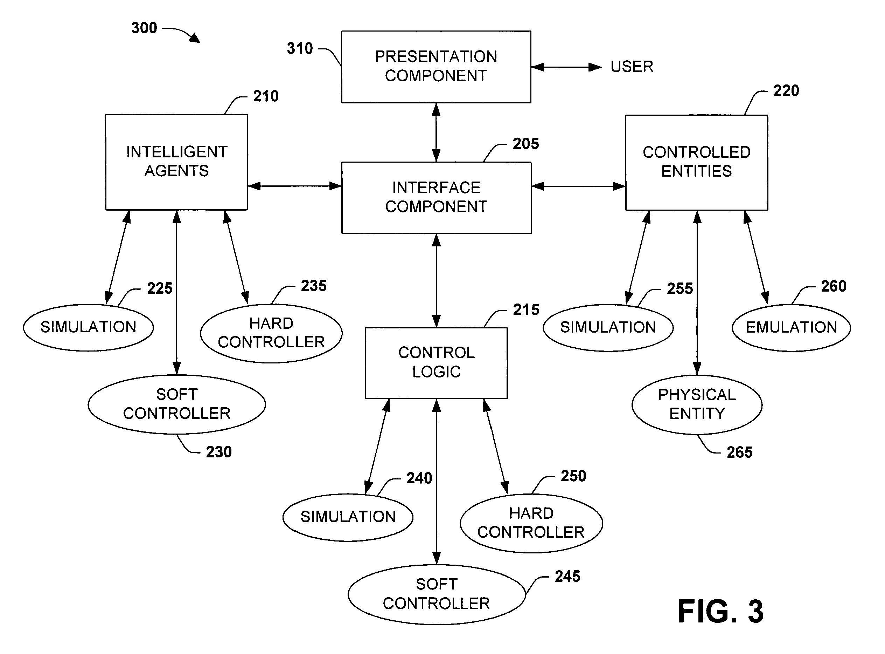

FIG. 3 illustrates a system 300 that provides visualization capabilities to observe and/or effectuate interaction between virtual and/or real components in an industrial control environment through an interface component 205. The system 300 at least includes the components of system 200 depicted in connection with FIG. 2. For instance, the system 300 include the interface component 205, the intelligent agents 210, the control logic 215, the controlled entities 220, the simulated intelligent agents 225, the soft controller based intelligent agents 230, the hard controller based intelligent agents 235, the simulated control logic 240, the soft controller based control logic 245, the hard controller based control logic 250, the simulated entities 255, the emulated entities 260, and the real physical entities 265.

In addition, the system 300 includes a presentation component 310. The presentation component 310 can provide various types of user interfaces to facilitate interaction between a user and the interface component 205 and any component coupled to the interface component 205. Such interaction includes developing agents and/or control logic, observing behavior, monitoring performance, setting parameters and variables, reading data, writing data, executing instructions, terminating executing instructions, accumulating historical information, trending, debugging, modifying, *etc*. As depicted, the presentation component 310 is a separate entity that is coupled to the interface component 205. However, it is to be appreciated that the presentation component 310 and/or similar presentation components can be part of a simulation environment, an emulation environment, a control environment, *etc*.

The presentation component 310 can provide one or more graphical user interfaces (GUIs), command line interfaces, and the like. For example, a GUI can be rendered that provides a user with a region or means to load, import, read, *etc.* data, and can include a region to present the results of such. These regions can comprise known text and/or graphic regions comprising dialogue boxes, static controls, drop-down-menus, list boxes, pop-up menus, as edit controls, combo boxes, radio buttons, check boxes, push buttons, and graphic boxes. In addition, utilities to facilitate the presentation such vertical and/or horizontal scroll bars for navigation and toolbar buttons to determine whether a region will be viewable can be employed. For example, the user can interact with one or more of the components coupled to the interface component 205.

The user can also interact with the regions to select and provide information *via* various devices such as a mouse, a roller ball, a keypad, a keyboard, a pen and/or voice activation, for example. Typically, a mechanism such as a push button or the enter key on the keyboard can be employed subsequent entering the information in order to initiate the search. However, it is to be appreciated that the invention is not so limited. For example, merely highlighting a check box can initiate information conveyance. In another example, a command line interface can be employed. For example, the command line interface can prompt (*e.g., via* a text message on a display and an audio tone) the user for information *via* providing a text message. The user can than provide suitable information, such as alpha-numeric input corresponding to an option provided in the interface prompt or an answer to a question posed in the prompt. It is to be appreciated that the command line interface can be employed in connection with a GUI and/or API. In addition, the command line interface can be employed in connection with hardware (*e*.*g*., video cards) and/or displays (*e*.*g*., black and white, and EGA) with limited graphic support, and/or low bandwidth communication channels.

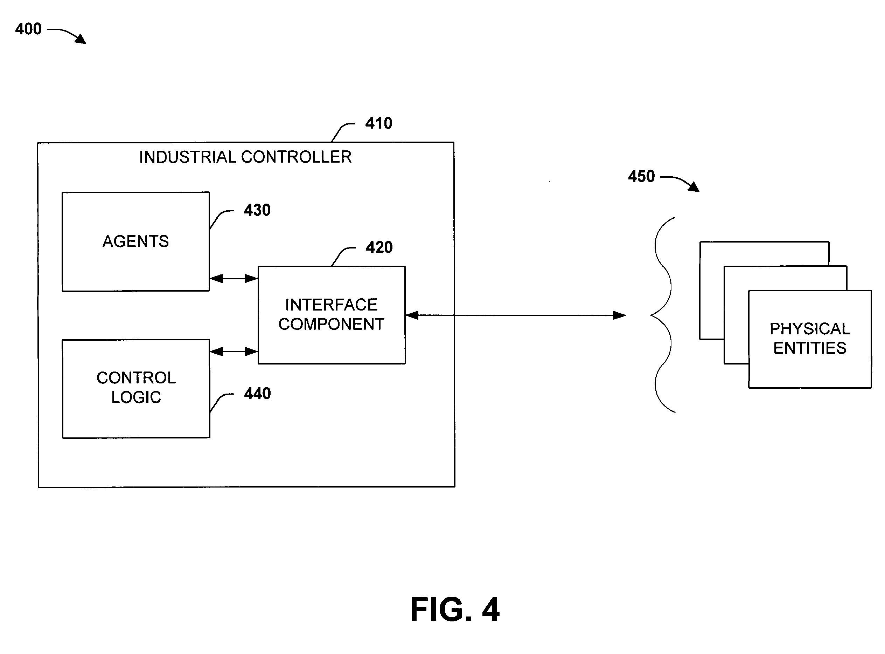

FIG. 4 illustrates an exemplary system 400 with an industrial controller 410 that includes an interface component 420 integrated therein. It is to be understood that the industrial controller 410 can be a soft controller and/or a hard controller. In addition, the interface component 420 can be substantially similar to the interface components 110 and 205 described in connection with FIGS 1, 2 and 3, and/or interface components described herein. The industrial controller 410 further includes one or more agents 430 ("agents 430") and control logic 440. The agents 430 can include at least one intelligent agent that is designed based on architectures such as FIPA, ACS/JDL, BDI, *etc.,* as described herein. The control logic 440 can include various control routines, instructions, code, *etc.* that can be programmed through industrial programming languages such as ST, SFC, FBD, IL, and LD, as well as other languages like C, C++, C#, GML, JAVA, Flow-Charts, *etc*., as described herein.

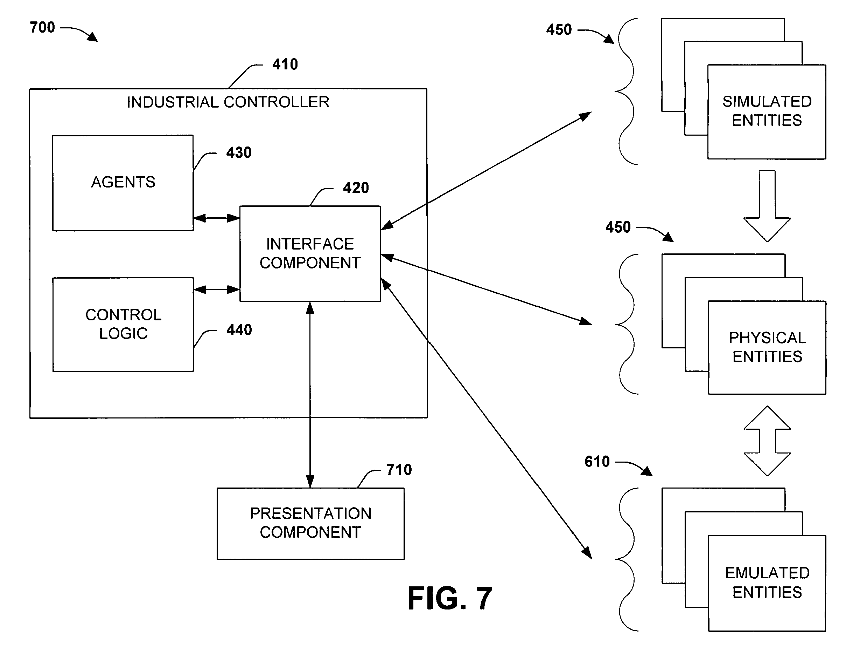

The agents 430 and the control logic 440 generally implement a control strategy to control one or more of physical entities 450, which can include plants, machines, apparatuses, processes, equipment, and the like. Such control can include reading data associated with the physical entities 450 and/or writing data that affects the physical entities 450. In accordance with an aspect of the subject invention, the interface component 420 can be a data table, data memory and/or I/O. As such, the interface component 420 can provide a universal (global, common, etc.) interface in terms of sharing information (*e.g.*, sensor and actuator), control data and/or any additional information such as values of different types (*e*.*g*., integer, double, string...). The system 400 can further include one or presentation components (as described in connection with FIGS. 3 and 7) that can be utilized to observe a behavior of the physical entities 450, manipulate the agents 430, the control logic 440 and/or the physical entities 450. The one or more presentation components can be individual computer based devices, one or more development environments, one or more APIs, one or more browsers, *etc*.

Additionally, the interface component 420 can provide a mechanism (not shown) for accessing controller data stored in tags (*e*.*g*., *via* read and write privileges). For instance, the interface component 420 can be utilized to read and/or write values by the control agents 430, the control logic 440 and/or the physical entities 450. For instance, an agent programmed in C++/JAVA language can utilize a C++/JAVA API to read and/or write tag values in the industrial controller 410 from any C++/JAVA program. Create and/or delete functionality can be supported to allow a user to dynamically add and/or remove values in order to reflect structural changes in the control system. By way of example, if a new sensor is added at runtime to a conveyor-based transportation system, a set of new elements can be dynamically created and added to corresponding components that share the interface component 420. For instance, a sensor agent can be added to the agents 430, sensor logic can be added to the control logic 440, sensor visualization can be added to a presentation subsystem (not shown), *etc.* Concurrently, the values corresponding to the state of the sensor can be added and shared by the new elements.

It is to be appreciated that communication between the interface component 420 and the physical entities 440 can be wire and/or wireless. Examples of suitable communications schemes include Ethernet, serial port, parallel port, coaxial cable, Infrared (IR), BlueTooth, Universal Serial Bus (USB), Firewire, and the like. In addition, essentially any industrial protocol can be utilized in accordance with the subject invention. Suitable protocols include, but are not limited to, Control and Information Protocol (CIP) protocols for communicating *via* DeviceNet, ControlNet, EtherNet/IP, and/or Controller Area Network (CAN), Modbus, Data Highway (DH), Data Highway plus (DH+), fieldbus protocols for communicating *via* Profibus, Interbus-S, RIP, P-Net, and AS-i, Transport Control Protocol (TCP) and Internet Protocol (IP) for communicating *via* the Internet, NetBios Extended User Interface (NetBEUI) for communicating *via* Large and Wide Area Networks (LANs and WANs), File Transfer Protocol (FTP) for communicating with workstations, servers and the like, Hyper Text Transfer Protocol (HTTP) for communicating *via* the World Wide Web (WWW), *etc.*

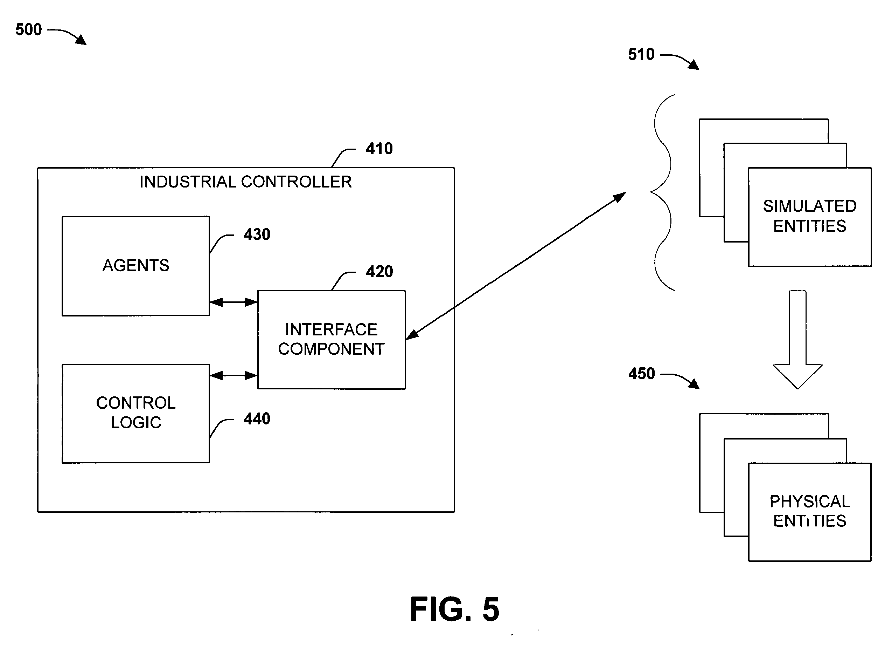

The physical entities 450 can be simulated in order to develop, test, verify, validate, *etc*. at least one of the industrial controller 410, the interface component 420, the agents 430, the control logic 440 and, and/or a physical entity design prior to building the physical entities 450. FIG. 5 illustrates an exemplary system 500 that can be employed for such purposes. The system 500 includes the industrial controller 410 as described above. The system 500 further includes simulated entities 510 coupled to the industrial controller 410 through the interface component 420. The simulated entities 510 can be a simulation of the physical entities 450 and/or other physical entities. As such, the system 500 can be utilized to configure, test, and validate a control strategy achieved through the industrial controller 410, the agents 430 and the control logic 440 prior to implementing the physical entities 450 and controlling it with the industrial controller 410, the agents 430 and the control logic 440. The simulation can include observing the simulated entities 510 behavior under control, interjecting anomalies and observing system responses, testing alternative strategies, verifying and validating agents and control logic, varying system performance, *etc*.

Upon validation, the simulated entities 510 can be implemented, in part or in full, to render the physical entities 450, which can be coupled to the interface component 420 and utilized ad described in connection with the system 400 of FIG. 4. In other aspects of the invention, the physical entities 450 can be joined to the system 500 through the interface component 420 such that both the physical entities 450 and the simulated entities 510 can be concurrently and/or serially controlled by the industrial controller 410. Furthermore, other simulations and/or physical entities can be concurrently connected to the interface component 420 and controlled by the industrial controller 410. Moreover, other industrial controllers, intelligent agents, and/or control logic can be coupled to the system 500 through the interface component 420.

Conventional techniques utilized to test control solutions typically include experimental testing with physical entities (*e.g.*, full systems, test beds, scaled down system...) prior to commissioning the solution for deployment. Such testing can be relatively expensive and time intensive and, for certain applications, not realistic. In addition, modifying components of such systems (*e.g.*, agents, control routines and/or the physical entity) and/or injecting error conditions can require development of new software/firmware/hardware, software builds, hardware testing, and/or re-design of the physical entities, leading to further costs and time consumption. The simulation approach described herein mitigates such issues of conventional techniques through the integrated virtual environment that marries the agents 430, the control 440, the simulated entities 510 and/or the physical entities 450 *via* the interface component 420.

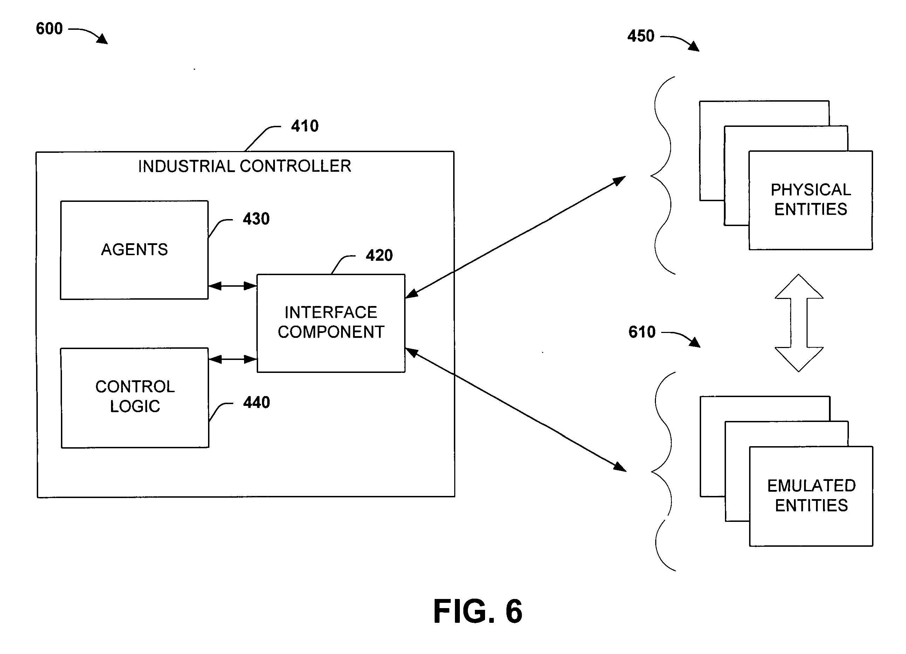

The physical entities 450 can also be emulated in order to test alternative configurations and/or modify existing configurations of any or all of the industrial controller 410, the interface component 420, the agents 430, the control logic 440 and, and/or a physical entities 450. FIG. 6 illustrates an exemplary system 600 that can be employed for such purposes. The system 600 includes the industrial controller 410 and the physical entities 450 as described above. The system 600 further includes one or more emulated entities 610 coupled to the industrial controller 410 through the interface component 420. In general, an emulated system as utilized herein refers to a virtual representation (*e.g.*, a mirror image, a copy...) of a physical system. Thus, the emulated entities 610 are representations of the physical entities 450. These representations typically are, at least initially, substantially similar (*e.g.*, a mirror image, a copy...) to the physical entities 450, but can be modified in order to test and validate alternative configurations. Thus, the emulated entities 610 can be utilized to test and validate variations of the agents 430, the control logic 440 and/or the physical entities 450, including observing the emulated entities 610 behavior under control, interjecting anomalies and observing responses, testing alternative strategies, varying system performance, *etc*.

Desired modifications to the agents 430, the control logic 440 and/or physical entities 450 (as determined through the emulated entities 610) can be implemented, in part or in full. Thus, modified agents can be loaded to the agents 430, and modified control logic can be loaded to the control logic 440, and/or the physical entities 450 can be modified and/or re-constructed. It is to be appreciated that both the physical entities 450 and the emulated entities 610 can be concurrently and/or serially controlled by the industrial controller 410. Thus, control strategy and/or physical entities modifications can be tested on-the-fly without interrupting an executing control strategy for the physical entities 450. In addition, any changes to the control strategy can be dynamically and seamlessly integrated into the executing control strategy.

As noted above, conventional techniques typically employ experimental testing with a physical version of the physical target systems in order to validate a control strategy and/or physical system prior to commissioning the solution for deployment, and such testing can be relatively expensive and time intensive and, for certain applications, not realistic. The emulation approach described herein mitigates such issues of conventional techniques through the integrated virtual environment that marries the agents 430, the control 440, the emulated systems 610 and/or the physical entities 440 *via* the interface component 420.

FIG. 7 illustrates a simulation/emulation environment 700 ("environment 700"). The environment 700 includes the industrial controller 410 and associated components (as described above) and a presentation component 710 that is coupled to the interface component 420. It is to be appreciated that the presentation component 710 can be substantially similar to the presentation component 310 of system 300, FIG. 3. The presentation component 710 can be utilized to observe and/or affect a behavior of the agents 430, the control logic 440, the physical entities 450, the simulated entities 510, and/or the emulated entities 610. For example, a user can employ the presentation component 710 to develop, test, verify, validate, modify, view, save, import, export, execute, remove, *etc*. any of the agents 430, the control logic 440, the physical entities 450, the simulated entities 510, and/or the emulated entities 610, as described herein. In addition, the presentation component 710 can provide graphical insight into control system activities, physical equipment states, low-level real-time control programs, and other related modules. Moreover, the presentation component 710 can be utilized to visualize (*e*.*g*., graphically, textually, symbolically...) the output, for example, in terms of an overall behavior of the system. It is to be appreciated that the presentation component 710 can be part of a development, simulation, and/or emulation environment and/or API. In addition, simulations and/or emulations can be performed *via* known tools such as Simulink, Arena, 20-sim, LabVIEW, VisSim, ACSL, and Easy5 and/or ad-hoc, proprietary, *etc*. tools, all of which can provide for modeling, simulating and/or analyzing systems.

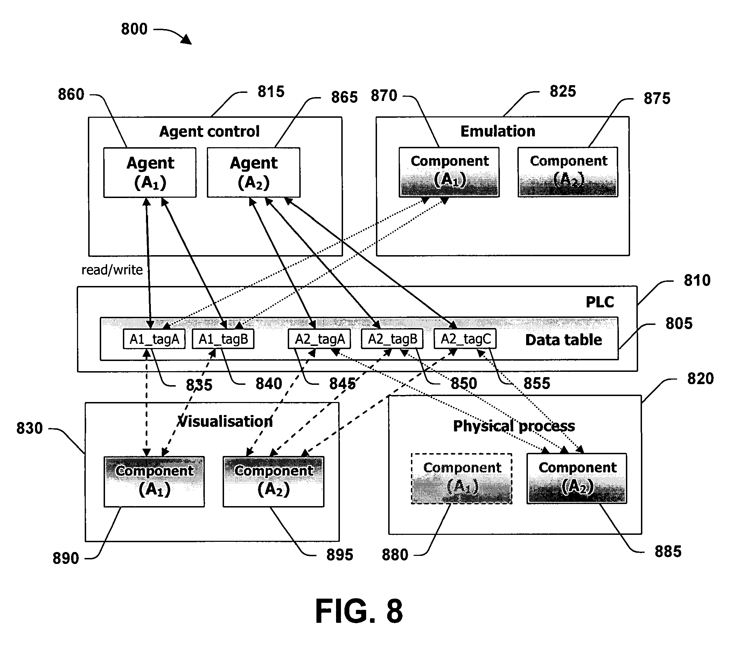

FIG. 8 illustrates a system 800 that employs a data table 805 of a PLC 810 to integrate the following components: agent control 815, a physical process 820, an emulation 825, and visualization 830. As depicted, the data table 805 is associated with at least tags 835, 840, 845, 850 and 855, wherein the tags 835 and 840 are associated with an agent 860 and the tags 845, 850 and 855 are associated with an agent 865. Communication between the agents 860 and 865 and the PLC 810 includes at least read and/or write access to the data table 805, including the tags 835, 840, 845, 850 and 855. The emulation 825 includes an emulated component 870 and an emulated component 875. In this particular example, the emulated component 870 is active while the emulated component 875 is inactive. However, the invention is not so limited; either, both or neither emulated components 870 and 875 can be active or inactive in various aspects of the invention. The emulated component 870 represents an emulation of a physical component 880 of the physical process 820, and the inactive emulated component 875 represents an emulation of a physical component 885 of the physical process 820.

Activities related to the active emulation, the emulation component 870, and the active physical component, physical component 885, are displayed by the visualization 830, as illustrated at 890 and 895, respectively. As described herein, any and all components coupled to the data table 805 and interact with each other. The shift of the control functionalities from the agent-based simulation towards the physical control equipment is usually carried out in a step-wise way and sequentially to provide a smooth transition as described in detail below. It is to be appreciated that the system 800 can provide for the transfer of one or more key properties of any agent-based system. For instance, the ability to react dynamically and appropriately to any structural/functional changes within the agent-based control system (adding or loss of any agent or physical component, decrease of reliability, overload ...) by message passing and coordination and/or cooperation techniques (*e.g.*, negotiation scenarios, auctioning...). Thus, no restart of simulation, control or visualization is needed in the case of the agent-based control system structural or functional change. The dynamic reactions of the agent-based simulation and control can be immediately visualized in the agent-based visualization system. Thus, the data-table (as a passive memory medium) can be shared by several key modules (including the visualization module) and complemented by relevant software services module (enabling the transmission of the agent-based properties) to provide novel aspects that facilitate implementing a control strategy.

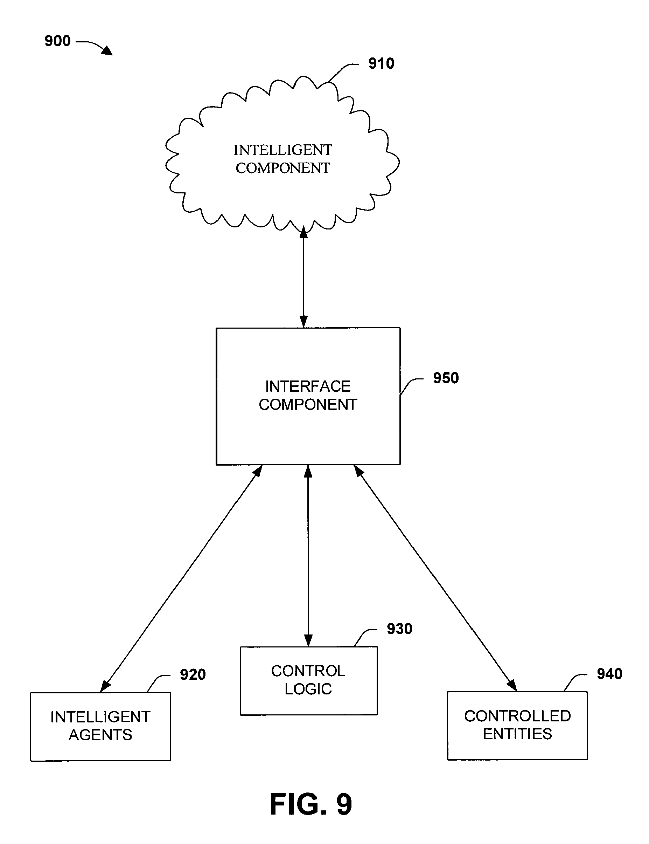

FIG. 9 illustrates a system 900 with an intelligent component 910 that facilitate integration of agents, control logic, simulations, emulations, and/or physical entities. Such integration includes, but it not limited to, any and all development, testing, validation, simulation, emulation, *etc*. By way of example, the intelligent component 910 can facilitate communication between intelligent agents 920 (including simulations, soft controlled and hard controlled variants), control logic 930 (including simulations, soft controlled and hard controlled variants) and controlled entities 940 (including simulations, emulations and physical variants) *via* an interface component 950. In addition, the intelligent component 910 can facilitate with transitioning from simulation to real control, from real control to emulation, and/or from emulation to real control.

It is to be understood that the intelligent component 910 can provide for reasoning about or infer states of the system, environment, and/or user from a set of observations as captured *via* events and/or data. Inference can be employed to identify a specific context or action, or can generate a probability distribution over states, for example. The inference can be probabilistic - that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources. Various classification (explicitly and/or implicitly trained) schemes and/or systems (*e.g.*, support vector machines, neural networks, expert systems, Bayesian belief networks, fuzzy logic, data fusion engines...) can be employed in connection with performing automatic and/or inferred action in connection with the subject invention.

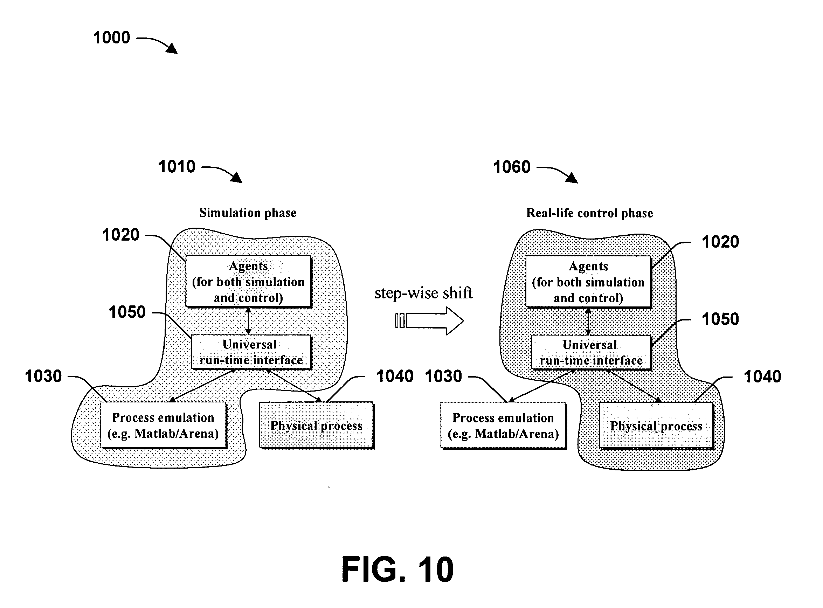

FIGS. 10-13 illustrate methodologies, in accordance with an aspect of the present invention. While, for purposes of simplicity of explanation, the methodologies are shown and described as a series of acts, it is to be understood and appreciated that the present invention is not limited by the order of acts, as some acts can, in accordance with the present invention, occur in different orders and/or concurrently with other acts from that shown and described herein. For example, those skilled in the art will understand and appreciate that one or more of the methodologies could alternatively be represented as a series of interrelated states or events, such as in a state diagram. Moreover, not all illustrated acts may be required to implement the methodologies in accordance with the present invention.

FIG. 10 illustrates a method 1000 to shift from simulation to real-life control. At 1010, agents 1020 (for both simulation and control) and a process emulation 1030 (of a physical process 1040) are interfaced through a universal run-time interface 1050 (*e.g.*, the interface components 110, 205 and 420, and data base table 810 described herein). As described herein, such configuration can be utilized to develop, test, verify, validate, *etc*. a control strategy, including any or all of the agents 1020 and/or the physical process 1040 through the process emulation 1030. At 1060, the process emulation 1030 is replaced by the physical process 1040, and the physical process 1040 can be controlled by agents 1020.

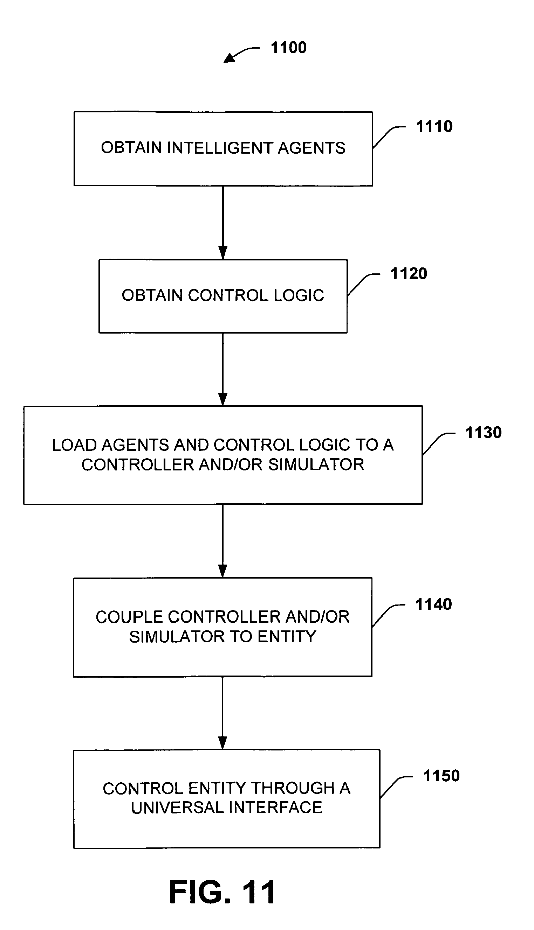

FIG. 11 illustrates a method 1100 for interfacing agents, control logic, and entities under their control for validating control strategies. At reference numeral 1110, one or more intelligent agents that facilitate control of an entity are obtained. As noted previously, an intelligent agent can be an autonomous intelligent computational unit that can independently render decisions. When utilized in connection with other intelligent agents, a community of autonomous, intelligent computational units can be formed, wherein the intelligent agents can cooperate to provide a desirable global behavior for comprehensive control of essentially any plants, machines, apparatuses, processes, equipment, *etc*. Such intelligent agents can be can be designed based on various protocols including FIPA, ACS/JDL, KQML, *etc*. and programmed in languages such as JAVA, C, C++, C#, Visual Basic, Pascal, Assembly, *etc.* as described herein. The intelligent agents can convey messages outside its domain through wrapping messages inside envelopes, for example, wrapping JDL messages inside FIPA envelopes.

At 1120, control logic for controlling the entity is obtained. Such logic can include various routines, programs, code, instructions, *etc*. that can be executed to measure one or more variables or inputs (*e.g.*, status, state...) and/or effectuate outputs associated with the controlled system, process, *etc.* Suitable programming languages include industrial languages such as structured text (ST), sequential function chart (SFC), functional block diagram (FBD), instruction list (IL), and ladder diagram (LD), as well as other languages like C, C++, C#, Graphical Motion Language (GML), JAVA, Flow-Charts, *etc.* At reference numeral 1130, the intelligent agents and control logic can be loaded to one or more controllers (*e.g.,* soft and hard) and/or a simulator. At 1140, the controller and/or simulator can be coupled to an entity such as a plant, a machine, an apparatus, a process, equipment, *etc*. through an interface component of the controller. In one aspect of the invention, the interface component is a data table or data memory of the controller. At 1150, the controller and/or simulator employs the executing intelligent agents and control logic to control the entity, wherein any and all communication and/or interaction between the controller and the entity is facilitated by the interface component.

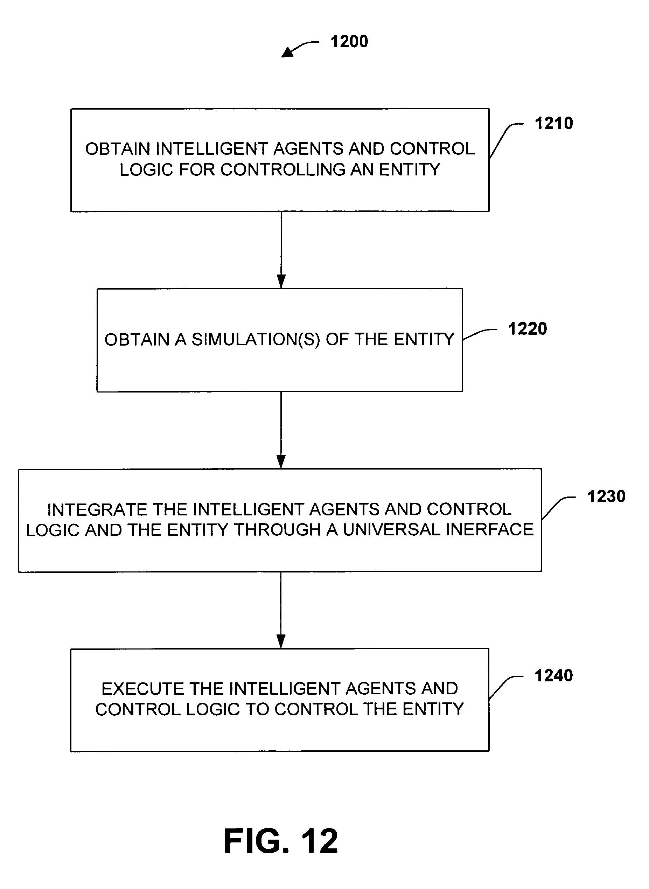

FIG. 12 illustrates a method 1200 for simulating and testing a control strategy for an entity prior to commission the strategy and/or building a physical system. At reference numeral 1210, one or more agents and control logic are obtained to control a physical system. It is to be appreciated that the one or more agents and control logic are designed based on a model of the physical system. At 1220, one or more simulations of the physical system are obtained. Likewise, the one or more simulations can be designed based on the model of the physical system. At 1230, the one or more agents and control logic can be linked to the one or more simulations. In one instance, the one or more agents and control logic are imported into a soft or hard controller and/or a simulator and executed therein, the one or more simulations executed *via* a simulator, and these components are coupled together through an interface component. At reference numeral 1240, the executing one or more agents and control logic are employed to control the simulation in order to validate at least one of the control strategy, the agents, the control logic and the physical system (through the simulation thereof). This novel approach to validation can mitigate any need to build a physical system in order to validate a control strategy, intelligent agents, control logic and/or a physical system. Conventional techniques typically require experimental testing with a physical target system prior to commissioning a solution for deployment. Such testing can be relatively expensive and time intensive and, for certain applications, not realistic. By mitigating physical system testing, the subject invention can reduce costs and time consumption.

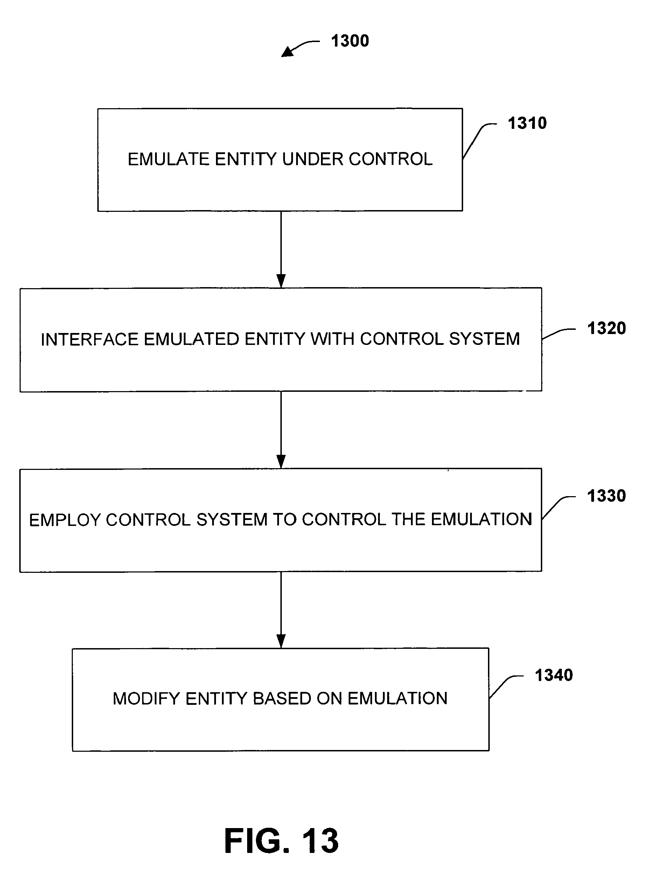

FIG. 13 illustrates a method 1300 for validating a control strategy for an existing entity under control. At 1310, an entity under control can be emulated. Such emulation can be a virtual mirror image, or copy, of the entity. At reference numeral 1320, the emulation can be coupled to a control system controlling the entity. As descried herein, such system can include an industrial controller with various agents and control logic executing therein, wherein the industrial controller communicates (*e.g.*, controls) with the entity through a data table or memory table of the industrial controller. At 1330, the industrial controller is utilized to control the emulation. In one aspect of the invention, such control can be utilized to prove alternative configurations of the physical system, wherein developer can dynamically modify the emulation and observer system behavior. The user can also dynamically modify any or all of the agents and control logic in order to refine control to be able to control the emulation as desired. At reference numeral 1340, the real system can be modified based on the emulation. The emulation can be removed and/or utilized to test other configurations.

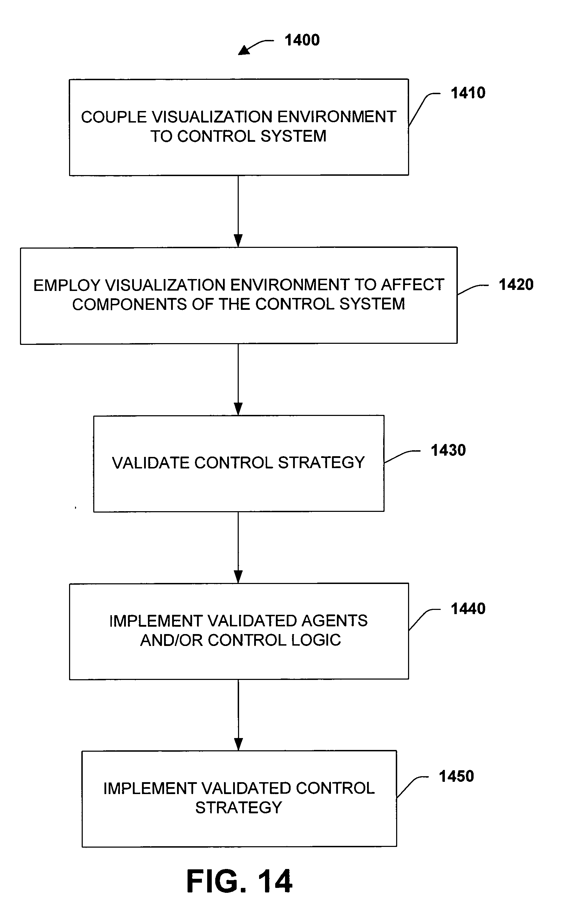

FIG. 14 illustrates a method 1400 for visualizing simulations and/or emulations to facilitate validating a control strategy. At 1410, one or more of intelligent agents, control logic, physical entities, simulated entities and/or emulated entities are coupled with a visualization environment. The visualization environment can include the presentation component described herein as well as other components. At 1420, the visualization environment is utilized for at least one of developing agents and/or control logic, observing behavior, monitoring performance, setting parameters and variables, reading data, writing data, executing instructions, terminating executing instructions, accumulating historical information, trending, debugging, modifying, *etc*. At 1430, the control strategy is validated. At reference 1440, validated intelligent agents and/or control logic can be implemented. At 1450, validated simulated entities and/or emulated entities can be utilized to build a control environment wherein the physical entities are control by the agents and control logic.

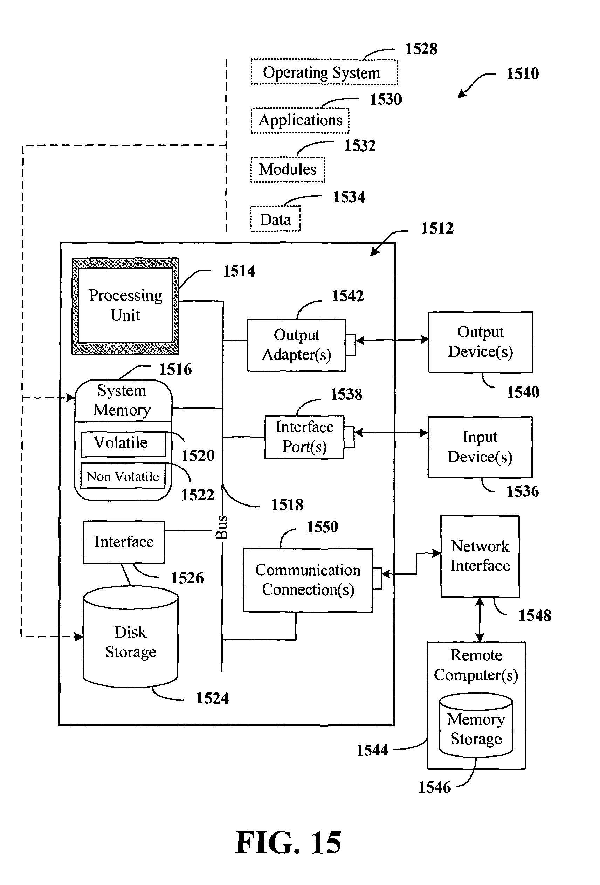

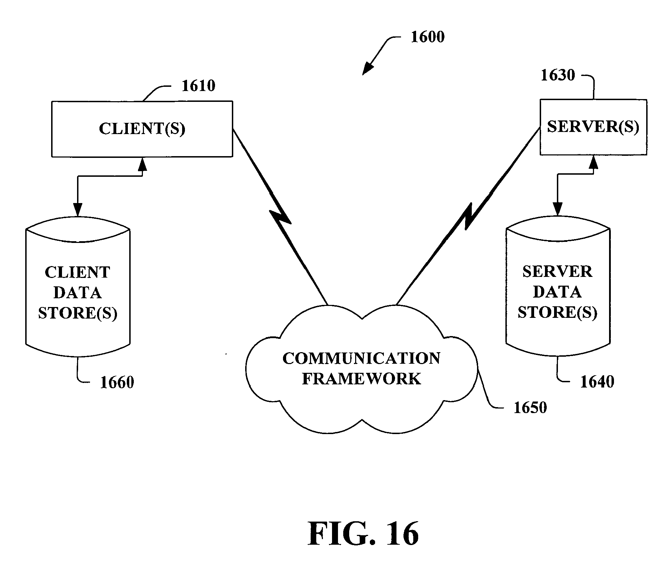

In order to provide a context for the various aspects of the invention, FIGS 15 and 16 as well as the following discussion are intended to provide a brief, general description of a suitable computing environment in which the various aspects of the present invention can be implemented. While the invention has been described above in the general context of computer-executable instructions of a computer program that runs on a computer and/or computers, those skilled in the art will recognize that the invention also can be implemented in combination with other program modules. Generally, program modules include routines, programs, components, data structures, *etc.* that perform particular tasks and/or implement particular abstract data types. Moreover, those skilled in the art will appreciate that the inventive methods may be practiced with other computer system configurations, including single-processor or multiprocessor computer systems, mini-computing devices, mainframe computers, as well as personal computers, hand-held computing devices, microprocessor-based or programmable consumer electronics, and the like. The illustrated aspects of the invention may also be practiced in distributed computing environments where task are performed by remote processing devices that are linked through a communications network. However, some, if not all aspects of the invention can be practiced on stand-alone computers. In a distributed computing environment, program modules may be located in both local and remote memory storage devices.

With reference to FIG. 15, an exemplary environment 1510 for implementing various aspects of the invention includes a computer 1512. The computer 1512 includes a processing unit 1514, a system memory 1516, and a system bus 1518. The system bus 1518 couples system components including, but not limited to, the system memory 1516 to the processing unit 1514. The processing unit 1514 can be any of various available processors. Dual microprocessors and other multiprocessor architectures also can be employed as the processing unit 1514.

The system bus 1518 can be any of several types of bus structure(s) including the memory bus or memory controller, a peripheral bus or external bus, and/or a local bus using any variety of available bus architectures including, but not limited to, 15-bit bus, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

The system memory 1516 includes volatile memory 1520 and nonvolatile memory 1522. The basic input/output system (BIOS), containing the basic routines to transfer information between elements within the computer 1512, such as during start-up, is stored in nonvolatile memory 1522. By way of illustration, and not limitation, nonvolatile memory 1522 can include read only memory (ROM), programmable ROM (PROM), electrically programmable ROM (EPROM), electrically erasable programmable ROM (EEPROM), or flash memory. Volatile memory 1520 includes random access memory (RAM), which acts as external cache memory. By way of illustration and not limitation, RAM is available in many forms such as static RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), direct Rambus dynamic RAM (DRDRAM), and Rambus dynamic RAM (RDRAM).

Computer 1512 also includes removable/non-removable, volatile/non-volatile computer storage media. FIG. 15 illustrates, for example a disk storage 1524. Disk storage 1524 includes, but is not limited to, devices like a magnetic disk drive, floppy disk drive, tape drive, Jaz drive, Zip drive, LS-100 drive, flash memory card, or memory stick. In addition, disk storage 1524 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage devices 1524 to the system bus 1518, a removable or non-removable interface is typically used such as interface 1526.

It is to be appreciated that FIG. 15 describes software that acts as an intermediary between users and the basic computer resources described in suitable operating environment 1510. Such software includes an operating system 1528. Operating system 1528, which can be stored on disk storage 1524, acts to control and allocate resources of the computer system 1512. System applications 1530 take advantage of the management of resources by operating system 1528 through program modules 1532 and program data 1534 stored either in system memory 1516 or on disk storage 1524. It is to be appreciated that the present invention can be implemented with various operating systems or combinations of operating systems.

A user enters commands or information into the computer 1512 through input device(s) 1536. Input devices 1536 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 1514 through the system bus 1518 *via* interface port(s) 1538. Interface port(s) 1538 include, for example, a serial port, a parallel port, a game port, and a universal serial bus (USB). Output device(s) 1540 use some of the same type of ports as input device(s) 1536. Thus, for example, a USB port may be used to provide input to computer 1512 and to output information from computer 1512 to an output device 1540. Output adapter 1542 is provided to illustrate that there are some output devices 1540 like monitors, speakers, and printers, among other output devices 1540, which require special adapters. The output adapters 1542 include, by way of illustration and not limitation, video and sound cards that provide a means of connection between the output device 1540 and the system bus 1518. It should be noted that other devices and/or systems of devices provide both input and output capabilities such as remote computer(s) 1544.

Computer 1512 can operate in a networked environment using logical connections to one or more remote computers, such as remote computer(s) 1544. The remote computer(s) 1544 can be a personal computer, a server, a router, a network PC, a workstation, a microprocessor based appliance, a peer device or other common network node and the like, and typically includes many or all of the elements described relative to computer 1512. For purposes of brevity, only a memory storage device 1546 is illustrated with remote computer(s) 1544. Remote computer(s) 1544 is logically connected to computer 1512 through a network interface 1548 and then physically connected *via* communication connection 1550. Network interface 1548 encompasses communication networks such as local-area networks (LAN) and wide-area networks (WAN). LAN technologies include Fiber Distributed Data Interface (FDDI), Copper Distributed Data Interface (CDDI), Ethernet/IEEE 802.3, Token Ring/IEEE 802.5 and the like. WAN technologies include, but are not limited to, point-to-point links, circuit switching networks like Integrated Services Digital Networks (ISDN) and variations thereon, packet switching networks, and Digital Subscriber Lines (DSL).

Communication connection(s) 1550 refers to the hardware/software employed to connect the network interface 1548 to the bus 1518. While communication connection 1550 is shown for illustrative clarity inside computer 1512, it can also be external to computer 1512. The hardware/software necessary for connection to the network interface 1548 includes, for exemplary purposes only, internal and external technologies such as, modems including regular telephone grade modems, cable modems and DSL modems, ISDN adapters, and Ethernet cards.

FIG. 16 is a schematic block diagram of a sample-computing environment 1600 with which the present invention can interact. The system 1600 includes one or more client(s) 1610. The client(s) 1610 can be hardware and/or software (*e.g.*, threads, processes, computing devices). The system 1600 also includes one or more server(s) 1630. The server(s) 1630 can also be hardware and/or software (*e.g.*, threads, processes, computing devices). The servers 1630 can house threads to perform transformations by employing the present invention, for example. One possible communication between a client 1610 and a server 1630 can be in the form of a data packet adapted to be transmitted between two or more computer processes. The system 1600 includes a communication framework 1650 that can be employed to facilitate communications between the client(s) 1610 and the server(s) 1630. The client(s) 1610 are operably connected to one or more client data store(s) 1660 that can be employed to store information local to the client(s) 1610. Similarly, the server(s) 1630 are operably connected to one or more server data store(s) 1640 that can be employed to store information local to the servers 1630.

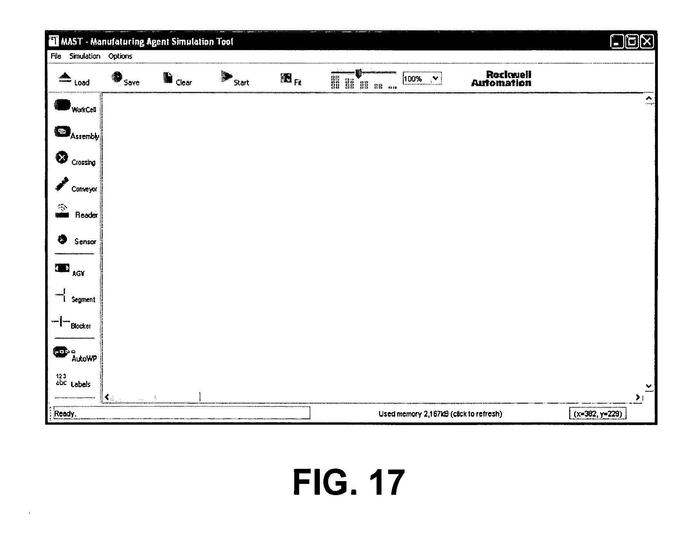

FIGS 17-23 illustrate exemplary interfaces that can be utilized with the simulation and/or emulation mechanism described herein. FIG. 17 illustrates an interface with mechanism to invoke load or save a configuration file, clear or start a simulation and/or emulation, and fit a simulation and/or emulation to the window pain. The interface further includes mechanism to create simulations and/or emulations. These mechanisms can be part of a configuration, which allows a user to selectively determine and/or create additional functionality. A configuration for these mechanisms can be created/stored in essentially any file format. For example, a markup language such as XML can be utilized to store configuration. These mechanisms provide for creating work cells, assemblies, crossings, conveyors, readers, and/or sensors. In addition, the interface has mechanisms for creating AGV's and associated segments and blockers. The interface further includes mechanisms to display labels, start an automatic simulation (autoWP), and control the automatic simulation.

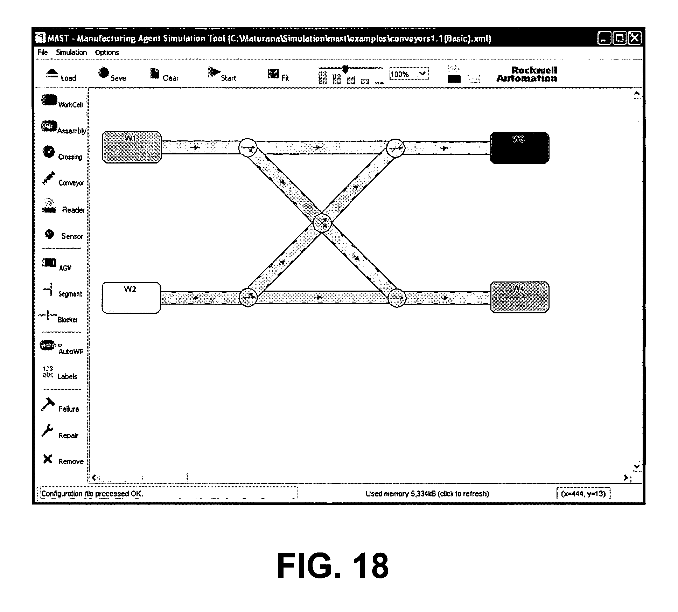

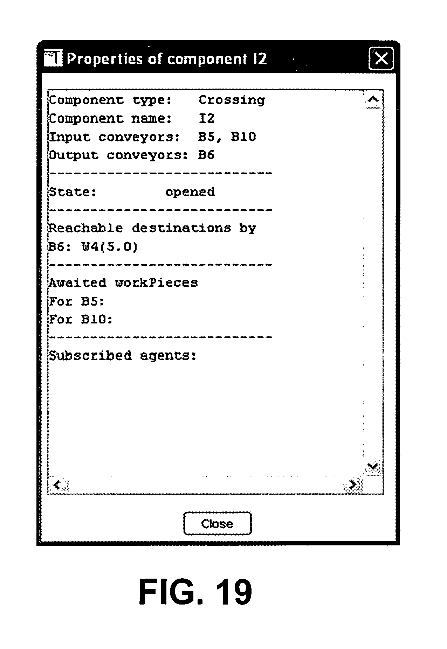

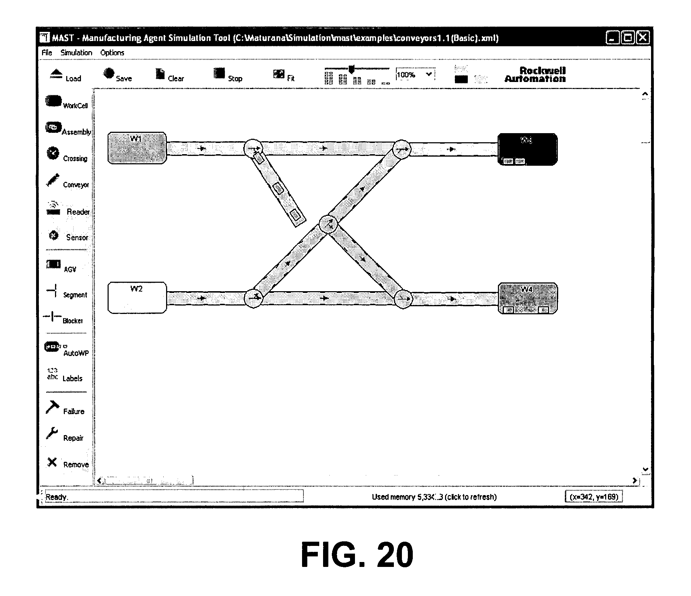

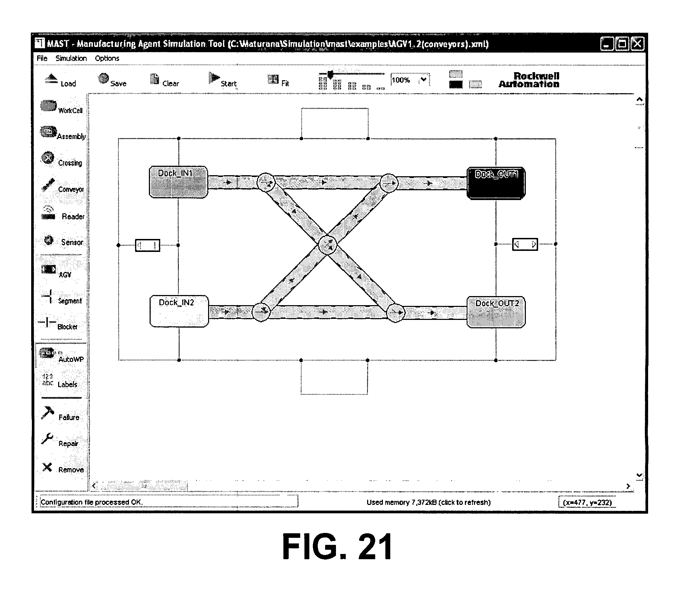

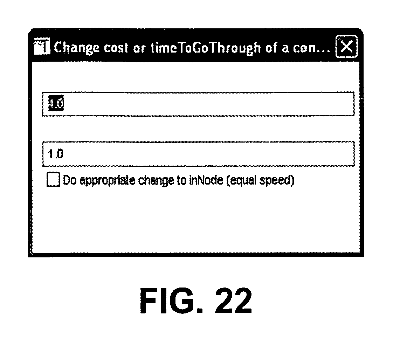

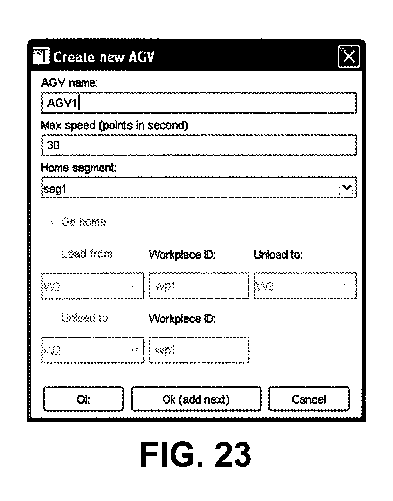

FIG. 18 illustrates the interface with a simulation and/or emulation. The simulation and/or emulation include various source work cells, conveyors, diverters, concentrators, destination work cells, *etc.* Such components can be added and/or modified prior, during and/or after running a simulation and/or emulation. Such modification can be achieved dynamically and seamlessly such that the simulation and/or emulation can continue to execute. FIG. 19 illustrates an interface to view and/or set properties of a component of a simulation and/or emulation. FIG. 20 illustrates a snapshot of a running simulation and/or emulation, wherein conveyor has been dynamically disabled in order to determine how a system will resolve the disabled conveyor. FIG. 21 illustrates a simulation and/or emulation with AGVs. FIG. 22 illustrates an interface to view and/or set costs and/or time associated with conveyors. FIG. 23 illustrates an interface to create AGVs.

What has been described above includes examples of the present invention. It is, of course, not possible to describe every conceivable combination of components or methodologies for purposes of describing the present invention, but one of ordinary skill in the art may recognize that many further combinations and permutations of the present invention are possible. Accordingly, the present invention is intended to embrace all such alterations, modifications, and variations that fall within the spirit and scope of the appended claims. In particular and in regard to the various functions performed by the above described components, devices, circuits, systems and the like, the terms (including a reference to a "means") used to describe such components are intended to correspond, unless otherwise indicated, to any component which performs the specified function of the described component (*e*.*g*., a functional equivalent), even though not structurally equivalent to the disclosed structure, which performs the function in the herein illustrated exemplary aspects of the invention. In this regard, it will also be recognized that the invention includes a system as well as a computer-readable medium having computer-executable instructions for performing the acts and/or events of the various methods of the invention. In addition, while a particular feature of the invention may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."

In summary the subject invention relates to systems and methods that provide dynamic and comprehensive analysis of an existing agent-based control system and/or a design for an agent-based control system. The system and methods employ an interface (*e.g.*, data table, data memory, I/O) that facilitates simulation (*e.g.*, simulating the physical system) and/or emulation (*e*.*g*., mirroring the physical system) of a plant, machine, apparatus, *etc*. and/or associated agents, control logic and/or visualization of their operation and interaction. The interface and visualization provide for dynamic simulation and/or emulation, wherein any change to any component can be automatically and immediately reflected in the simulation and/or emulation, and/or implemented in a real environment. In addition, the subject invention provides for seamless switching between simulation/emulation and the physical system.

## Claims

1. A system that integrates simulation with industrial control to validate a control solution, comprising:
an interface component that integrates one or more intelligent agents, control logic and a simulation of a physical industrial automation entity; and
a presentation component coupled to the interface component, the presentation component provides user interaction with the one or more intelligent agents, the control logic and the simulation during execution to dynamically alter any of the one or more intelligent agents, control logic, and the simulation in order to validate the control solution.

2. The system of claim 1, the interface component is one of a data table, a data memory and I/O of an industrial controller.

3. The system of claim 1 or 2, the one or more agents and control logic represent a control strategy designed based on the physical industrial automation entity.

4. The system of claim 1, 2 or 3, the physical industrial automation entity is one of a plant, a system, a process, a machine, equipment, and an apparatus.

5. The system of one of claims 1 to 4, the one or more agents and control logic are employed to control the simulation in order to validate a control solution.

6. The system of one of claims 1 to 5, the simulation is utilized to construct the physical industrial automation entity, wherein the physical industrial automation entity is integrated with the one or more agents and control through the interface component.

7. The system of claim 6, the one or more agents and control logic are employed to control the physical industrial automation entity.

8. The system of one of claims 1 to 7, the one or more agents and control logic are executed in at least one of a soft controller, a hard controller, and a simulator.

9. The system of one of claims 1 to 8, the interface component further integrates the physical industrial automation entity with the one or more intelligent agents, control logic and a simulation, wherein at least a portion of the physical industrial automation entity and at least portion of the simulation, which represents a remaining portion of the physical industrial automation entity, are controlled by the one or more intelligent agents and the control logic to validate the remaining portion of the physical industrial automation entity.

10. A system that facilitates control strategy validation through integrating an emulation of a physical system/process with an industrial controller controlling the physical system/process, comprising:
a controller that executes at least one intelligent agent and control logic to control the physical system/process, the controller includes a common interface that couples the at least one intelligent agent, the control logic and the physical system/process; and
a component that seamlessly switches control from control of an emulation of the physical system/process to control of the physical system/process and control of the physical system/process to control of the emulation of the physical system/process , the emulation is coupled to the at least one agent and control logic through the common interface.

11. The system of claim 10, the emulation is utilized to validate an alternative control strategy.

12. The system of claim 10 or 11, the common interface is one of a data table, data memory and I/O.

13. The system of claim 10, 11 or 12, the at least one intelligent agent is programmed in one of C, C++, C#, JAVA, J#, Visual Basic, Pascal, Prolog, and Python .

14. The system of one of claims 10 to 13, the control logic is programmed in one of structured text (ST), sequential function chart (SFC), functional block diagram (FBD), instruction list (IL), and ladder diagram (LD).

15. The system of one of claims 10 to 14, the control logic is programmed in one of C, C++, C#, JAVA, J#, Visual Basic, Pascal, Prolog, Python, Graphical Motion Language (GML) and a Flow-Chart.

16. The system of one of claims 10 to 15, the emulation is utilized to validate a variation of the control strategy.

17. The system of claim 16, the variation is one of a modification to the at least one intelligent agent, the control logic and the physical system/process.

18. The system of one of claims 10 to 17, the controller is one of a soft controller and a hard controller.

19. The system of one of claims 10 to 18, the common interface provides for seamless and dynamic interaction amongst the at least one intelligent agent, the control logic and the physical system/process, or the emulation thereof.

20. The system of one of claims 10 to 19, further comprising a component that controls a simulation of one or more physical systems/processes.

21. The system of one of claims 10 to 20, further comprising a visualization component that facilitates user interaction with the at least one intelligent agent, the control logic and the emulation of the physical system/process.

22. The system of claim 21, the visualization component provides one or more mechanisms to at least load, create, delete, save, clear, start, end, and re-size a simulation and/or emulation within a graphical region.

23. The system of claim 21, the visualization component provides for saving simulations and emulations in a Java-based programming language.

24. The system of claim 21, the visualization component provides for creating custom functionality through a markup language.

25. The system of claim 21, the visualization component provides one or more mechanisms for creating a work cell, an assembly cell, a crossing, a conveyor, a reader, an AGV, and a sensor.

26. The system of claim 21, the visualization component provides one or more mechanisms to display labels, start an automatic simulation, control the automatic simulation, view attributes associated with control decisions, set attributes for control decisions and set execution times for control decisions.

27. The system of claim 21, the visualization component facilitates developing agents and/or control logic, observing behavior, monitoring performance, setting parameters and variables, reading data, writing data, executing instructions, terminating executing instructions, accumulating historical information, trending, and debugging

28. A method for shifting from an emulation to a real-life industrial system, comprising:
interfacing intelligent agents and the emulation through a universal run-time interface component;
validating the emulation through control by the intelligent agents;
configuring the real-life industrial system based on the validated emulation; and
seamlessly replacing the emulation with the real-life industrial system without affecting the intelligent agents and controlling the real-life industrial system with the intelligent agents.

29. A method for interfacing agents, control logic, and entities under their control for validating control strategies, comprising:
obtaining one or more intelligent agents that facilitate controlling an entity;
obtaining control logic that that facilitate controlling the entity;
conveying the one or more intelligent agents and control logic to an industrial controller;
coupling the industrial controller to a simulation of the entity; and
executing the one or more intelligent agents and control logic to control the simulation of the entity.

30. The method of claim 29, further comprising implementing a physical entity based on a validated simulation.

31. The method of claim 30, executing the one or more intelligent agents and control logic to control the physical entity.

32. The method of claim 31, further comprising the emulating the physical entity.

33. The method of claim 32, further comprising executing the one or more intelligent agents and control logic to control the emulation of the physical entity.

34. The method of claim 33, further comprising modifying the physical entity based on the emulation of the physical entity.

35. The method of one of claims 33 to 34, further comprising modifying at least one of the intelligent agents and the control logic based on the simulation and/or the emulation of the physical entity.

36. The method of one of claims 29 to 35, further comprising integrating the one or more intelligent agents, the control logic and the simulation through one of a data table, a data memory and I/O of the industrial controller.

37. The method of one of claims 29 to 36, the industrial controller is one of a soft controller and a hard controller.

38. The method of one of claims 29 to 37, further comprising visualizing the intelligent agents, control logic and simulation.

39. A system that integrates simulation/emulation with industrial control to validate a control solution, comprising:
means for interfacing one or more intelligent agents, control logic and a simulation or emulation of a physical industrial automation entity; and
means for visualizing and effectuating the one or more intelligent agents, the control logic and the simulation or emulation during execution to dynamically alter any of the one or more intelligent agents, control logic, and the simulation or emulation in order to validate the control solution.
